# EUROPÄISCHE PATENTSCHRIFT

(11) **EP 0 757 330 B1**
(45) Veröffentlichungstag und Bekanntmachung des Hinweises auf die Patenterteilung: **02.04.2003**
(21) Anmeldenummer: 96112537.4
(22) Anmeldetag: 02.08.1996
(51) Int. Cl.: G06K 19/077

(54) **Datenträger und Verfahren zur Herstellung eines Datenträgers**
Data carrier and method of producing a data carrier
Support de données et procédé de fabrication d'un support de données

(30) Priorität: 04.08.1995 DE 19528730
(43) Veröffentlichungstag der Anmeldung: 05.02.1997
(73) Patentinhaber: Giesecke & Devrient GmbH, 81677 München (DE)
(72) Erfinder: Tehrani, Haghiri, 80797 München (DE); Oertel, Achim, 83026 Rosenheim (DE); Ojster, Albert, 81373 München (DE)
(74) Vertreter: Klunker . Schmitt-Nilson . Hirsch

(56) Entgegenhaltungen:
- EP-A- 0 212 505
- EP-A- 0 268 830
- EP-A- 0 623 897
- FR-A- 2 660 092
- PATENT ABSTRACTS OF JAPAN vol. 10, no. 173 (P-469) [2229] , 18.Juni 1986 & JP 61 023283 A (TOPPAN INSATSU K.K.), 31.Januar 1986,

## Beschreibung

Die Erfindung betrifft einen Datenträger und ein Verfahren zur Herstellung eines mehrschichtigen Datenträgers mit wenigstens einer Öffnung in zumindest einer Schicht zur Aufnahme eines elektronischen Moduls.

Derartige Verfahren sind bereits seit längerem bekannt und dienen der Herstellung von Datenträgern, wie beispielsweise Chipkarten, die heute in vielen Bereichen, z.B. in Zugangskontrollsystemen oder als Zahlungsmittel verwendet werden. Das im Datenträger befindliche elektronische Modul umfaßt üblicherweise einen Träger, mit einem integrierten Schaltkreis sowie Kopplungselemente, die leitend mit dem integrierten Schaltkreis verbunden sind und der Kommunikation mit externen Geräten dienen. Die Kopplungselemente sind entweder in Form von Kontaktflächen zur berührenden Kontaktabnahme oder auch als Spulen zur nichtberührenden Kontaktabnahme ausgebildet.

Bei herkömmlichen Verfahren wird das elektronische Modul in der Öffnung eines Datenträgers angeordnet. Der verbleibende Hohlraum zwischen dem elektronischen Modul und der Öffnung wird hierbei freigelassen. Dies kann dazu führen, daß sich in den die Öffnung abdeckenden Schichten des Datenträgers Deformationen ergeben, die das Erscheinungsbild in diesem Bereich aufgebrachter, empfindlicher Elemente, wie beispielsweise Unterschriftsstreifen oder Hologramme, stören.

Ein mögliches Verfahren um plane Oberflächen der Deckschichten zu erzielen, wird in der DE 32 48 385 A1 beschrieben. Hierin wird ein elektronisches Modul von einer ersten Seite her in einer zweistufigen Durchbrechung eines Schichtlaminats angeordnet. In einem zweiten Schritt wird von der zweiten Seite des Schichtlaminats her der noch zwischen der Durchbrechung und dem elektronischen Modul verbleibende Hohlraum mit einem Füllmaterial, wie Silikonkautschuk, aufgefüllt. Nach dem Einfüllen des Füllmaterials wird auf der zweiten Seite des Schichtlaminats eine Deckschicht auflaminiert, wobei sich auch im Bereich der aufgefüllten Durchbrechung nunmehr eine plane Oberfläche ergibt.

Die DE 30 29 939 C2 beschreibt ebenfalls ein Verfahren zur Herstellung mehrschichtiger Datenträger. Hierin wird ein elektronisches Modul in der Durchbrechung einer Kernschicht angeordnet. Daraufhin wird auf dieser Kernschicht symmetrisch von beiden Seiten her jeweils eine Schicht aus thermoplastischem Kunststoff und eine Deckschicht positioniert, wobei die Schichten aus thermoplastischem Kunststoff einen niedrigeren Erweichungspunkt aufweisen als die Kernschicht und die Deckschichten des Datenträgers. Die Schichtfolge wird unter Druck und Wärme laminiert, wodurch der erweichende thermoplastische Kunststoff in den noch verbleibenden Hohlraum zwischen dem elektronischen Modul und der Durchbrechung eindringt und diesen auffüllt.

Es ist somit bekannt, den verbleibenden Hohlraum der Öffnung im Bereich des Moduls mit einem Füllmaterial aufzufüllen und damit Datenträger mit planen Oberflächen im Bereich des elektronischen Moduls zu erzielen. Die dazu notwendigen Maßnahmen sind allerdings wegen der speziellen Verfahrensschritte oder der Notwendigkeit, besondere Schichten einsetzen zu müssen, noch vergleichsweise aufwendig.

Aus der FR-A-2 660 092 ist ein Verfahren zur Herstellung eines mehrschichtigen, ein elektronisches Modul enthaltenden Datenträgers bekannt, wobei das Modul so in eine in zwei der Datenträgerschichten eingebrachte Öffnung angeordnet wird, daß zwischen Modul und den die Öffnung enthaltenden Schichten vor dem Laminieren ein Hohlraum verbleibt. Beim nachfolgenden Laminieren erweichen die die Öffnung beinhaltenden Schichten und füllen den Hohlraum. Nach Abschluß des Laminiervorgangs ist das Modul seitlich unmittelbar von Schichtmaterial umgeben. Um mit diesem Verfahren Datenträger mit planer Oberfläche zu erhalten, müssen Material und Modul bei der Herstellung vergleichsweise hoch belastet werden.

Es ist deshalb Aufgabe der Erfindung, ein zugleich unkompliziert und schonend durchführbares Verfahren zur Herstellung eines mehrschichtigen Datenträgers anzugeben, welches Datenträger liefert, deren Oberfläche auch im Bereich des Moduls keine Verformungen aufweist.

Die Aufgabe wird durch die kennzeichnenden Merkmale des Anspruchs 1 gelöst.

Der Grundgedanke der Erfindung ist darin zu sehen, daß das zum Füllen des verbleibenden Hohlraums verwendete Material vorzugsweise in Drucktechnik auf wenigstens einer der Schichten bzw. auf das elektronische Modul aufgebracht wird. Der besondere Vorteil der Erfindung liegt darin, daß damit bereits vor der eigentlichen Herstellung des Datenträgers auf einzelnen Schichten das Füllmaterial aufgebracht ist. Hierdurch müssen weder bei der eigentlichen Herstellung durch Lamination zusätzliche Schichten aus Füllmaterial positioniert werden, noch muß das Füllmaterial in einem gesonderten Verfahrensschritt nach der Lamination bereitgestellt werden. Darüber hinaus kann durch das erfindungsgemäße Verfahren auch bereichsweise Füllmaterial bereitgestellt werden, wodurch das Füllmaterial gezielt im Bereich der Öffnung zur Verfügung steht.

Bei dem erfindungsgemäßen Verfahren wird auf wenigstens einer Schicht, die eine Öffnung zur Aufnahme des elektronischen Moduls in einer weiteren Schicht abdecken soll, ein Füllmaterial in Form von z.B. thermoplastischem Kunststoff oder Wachs wenigstens im Bereich der Öffnung aufgetragen. Alternativ dazu kann das Füllmaterial auch über der Durchbrechung des Schichtlaminats bzw. direkt am elektronischen Modul angeordnet werden. Das Füllmaterial weist dabei einen Erweichungspunkt auf, der unterhalb desjenigen der Schichten des Datenträgers liegt. Hierdurch wird erreicht, daß das Füllmaterial bei der Lamination des Datenträgers unter Wärme und Druck zuerst erweicht und zumindest teilweise die Öffnung im Bereich des elektronischen Moduls auffüllt. Hiernach erweichen die restlichen Schichten des Datenträgers und verbinden sich miteinander, wobei die die Öffnung abdeckende Schicht im Bereich der Öffnung eine plane Oberfläche aufweist, da der verbleibende Hohlraum im Bereich des elektronischen Moduls bereits mit dem Füllmaterial aufgefüllt ist.

Der Auftrag des Füllmaterials auf der Schicht kann durch die verschiedensten Verfahren erfolgen und läßt sich beispielsweise auf die Schicht aufdrucken oder es kann ein aus einer Folie aus Füllmaterial ausgestanztes Stück aufgeklebt werden. Es ist weiterhin auch denkbar, das Füllmaterial im erweichten Zustand oder als Lack über eine Kanüle in Form eines Tropfens aufzusetzen.

Weitere Vorteile und Merkmale können den Figuren entnommen werden.

Hierin zeigen
- Fig. 1: Datenträger mit einem berührend kontaktierenden elektronischen Modul, hergestellt nach dem erfindungsgemäßen Verfahren,
- Fig. 2: Schnittzeichnung der Einzelschichten des Datenträgers gemäß Fig. 1 entlang der Linie A - A vor der Fertigstellung,
- Fig. 3: Schnittzeichnung des fertigen Datenträgers gemäß Fig. 1 entlang der Linie A - A,
- Fig. 4: Schnittzeichnung der Einzelschichten einer zweiten Ausführungsform eines Datenträgers mit einem nichtberührend kontaktierenden elektronischen Modul, hergestellt nach dem erfindungsgemäßen Verfahren,
- Fig. 5: Schnittzeichnung des fertiggestellten Datenträgers gemäß Fig. 4,
- Fig. 6: perspektivische Darstellung einer als Halbzeug ausgebildeten Schicht 11 aus Fig. 4,
- Fig. 7: Schnittzeichnung der Einzelschichten eines weitergebildeten Datenträgers nach Fig. 4 mit einer Durchbrechung zur Aufnahme der Spule,
- Fig. 8: Schnittzeichnung einer zweiten Weiterbildung des Datenträgers gemäß Fig. 4 mit zusätzlicher Schicht zur Aufnahme eines Trägersubstrates,
- Fig. 9: Schnittzeichnung des fertiggestellten Datenträgers nach Fig. 8,
- Fig. 10: Schnittzeichnung eines Datenträgers nach Fig. 4 bei Anbringung des Füllmaterials an der Durchbrechung,

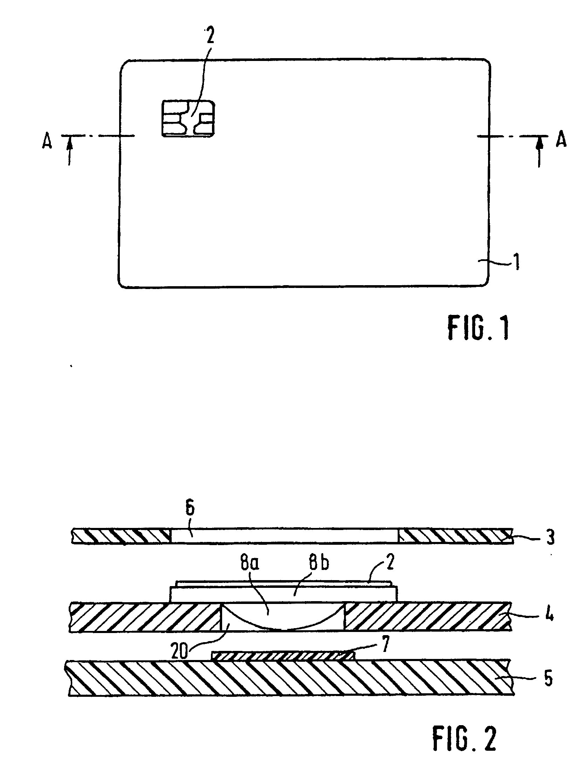

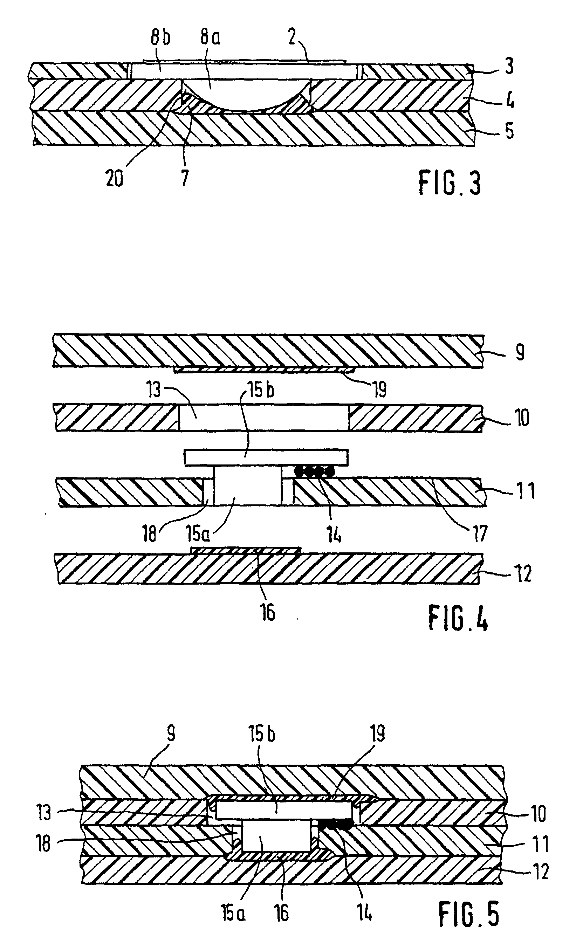

Fig. 1 zeigt einen Datenträger, der gemäß dem erfindungsgemäßen Verfahren hergestellt worden ist. Er umfaßt den aus mehreren Schichten hergestellten Körper 1, wobei in einer Öffnung des Körpers 1 ein elektronisches Modul angeordnet ist. Das elektronische Modul umfaßt allgemein einen integrierten Schaltkreis, der leitend mit den in Fig. 1 gezeigten Kontaktflächen 2 zur berührenden Kommunikation mit einem externen Gerät verbunden ist. Derartige elektronische Module sind dem Fachmann bereits hinreichend bekannt und sind beispielsweise in den obengenannten Schriften näher beschrieben.

Fig. 2 zeigt eine Schnittzeichnung der beispielsweise aus PVC hergestellten Einzelschichten 3, 4 und 5 des Datenträgers gemäß Fig. 1 entlang der Linie A - A vor der Fertigstellung des Datenträgers. Die Schichten 3, 4 und 5, wie auch die Schichten der nachfolgenden Ausführungsbeispiele können in Form von dem Fachmann hinreichend bekannten Mehrnutzenbogen oder in Form von langen Bändern, die als Rolle aufgewickelt sind, bereitgestellt werden. Die Schichten 3 und 4 weisen hierbei Öffnungen zur Aufnahme des elektronischen Moduls in Form von Durchbrechungen 6 und 20 auf. In der Durchbrechung 20 der Schicht 4 befindet sich ein elektronisches Modul, umfassend die Kontaktflächen 2 und den Chipträger, bestehend aus dem Trägersubstrat 8b und dem Gußkörper 8a, der den integrierten Schaltkreis umgibt. Der integrierte Schaltkreis ist leitend über beispielsweise Bonddrähtchen durch das Trägersubstrat hindurch mit den Kontaktflächen 2 verbunden.

Selbstverständlich ist das hier gezeigte elektronische Modul nur beispielhaft und nicht auf die gezeigte Ausführungsform beschränkt. Vielmehr kann das Modul auch in anderen, dem Fachmann bereits hinlänglich bekannten Techniken, wie beispielsweise Leadframe-Technik oder in TAB-Technik gefertigt sein.

Das elektronische Modul wird in der Durchbrechung 20 positioniert, wobei der die Durchbrechung 20 überlappende Teil des Trägersubstrats 8b beispielsweise über einen Kleber auf der Schicht 4 fixiert wird. Es kann sich hierbei um für den Fachmann bereits hinreichend bekannte Kleber wie beispielsweise Flüssigkleber oder thermoplastische Kunststoffe handeln. Auf der Schicht 5 befindet sich im Bereich der Durchbrechung 20 Füllmaterial in Form einer Schicht 7 aus thermoplastischem Kunststoff, deren Erweichungspunkt niedriger als derjenige der Schicht 5 ist.

Bei derartigen Schichten kann es sich beispielsweise um Polyethylen oder um andere Materialien, wie Lacke etc., handeln. Die Schicht 7 aus thermoplastischem Kunststoff kann z.B. durch ein Siebdruckverfahren oder ein Thermo-transferdruckverfahren aufgetragen werden und überlappt in diesem Ausführungsbeispiel die Durchbrechung 20. Selbstverständlich kann die Schicht 7 aus thermoplastischem Kunststoff auch kleiner sein oder aber den Abmessungen der Durchbrechung 20 entsprechen. Darüber hinaus sind noch andere Verfahren möglich, um die Schicht 7 aus thermoplastischem Kunststoff auf der Schicht 5 aufzubringen. So kann die Schicht 7 auch aufgebracht werden, indem aus einer Folie aus thermoplastischem Kunststoff ein entsprechendes Stück ausgestanzt und über einen Kleber auf der Schicht aufgeklebt wird.

Zur Fertigstellung des Datenträgers werden die Schichten 3, 4 und 5 unter der Einwirkung von Druck und Wärme aufeinanderlaminiert, wobei die dabei zuerst erweichende Schicht 7 aus thermoplastischem Kunststoff in den verbleibenden Hohlraum 20 im Bereich des Moduls eindringt und den Hohlraum somit auffüllt. Hiernach erweichen die restlichen Schichten 3, und 5 und verbinden sich miteinander unter dem Druck.

Um die Haftungswirkung zwischen den Schichten des Datenträgers zu erhöhen, können einzelne Schichten und/oder das elektronische Modul vor der Lamination mit einem Plasma vorbehandelt werden.

Den fertiglaminierten Datenträger zeigt Fig. 3. Hierin ist zu sehen, wie der thermoplastische Kunststoff 7 den verbleibenden Hohlraum der Durchbrechung 20 auffüllt.

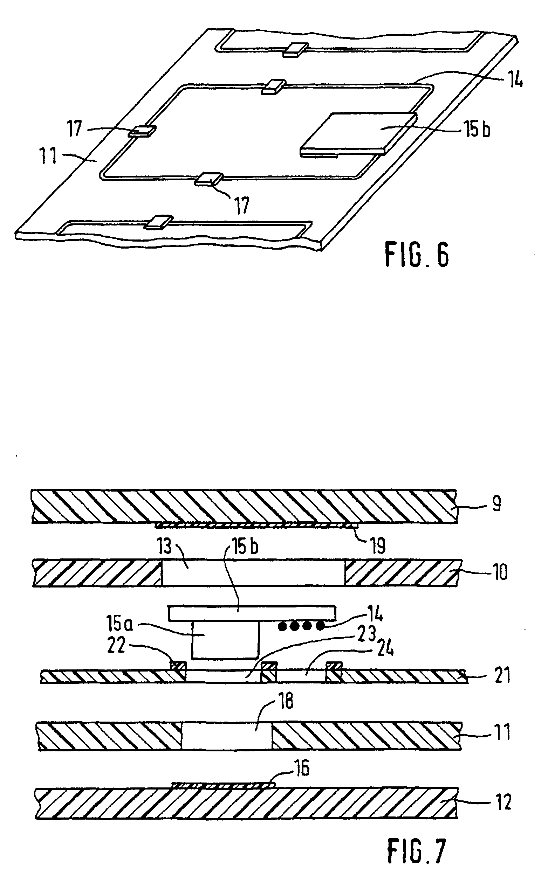

Die Fig. 4 zeigt die Schnittdarstellung der Einzelschichten 9, 10, 11 und 12 eines zweiten Ausführungsbeispiels eines Datenträgers vor der Fertigstellung, wobei der Datenträger ein nichtberührend kontaktierendes elektronisches Modul aufweist. Die Schichten 10 und 11 weisen hierbei Öffnungen zur Aufnahme des elektronischen Moduls in Form von Durchbrechungen 13 und 18 auf. Selbstverständlich können die Öffnungen auch anders ausgeführt sein und beispielsweise in Form eines Sacklochs oder als mehrstufige Durchbrechung vorliegen.

Das elektronische Modul ist hierbei ebenfalls beispielhaft und schematisiert gezeichnet. Es weist als Kopplungselement zur Kommunikation mit einem externen Gerät eine Spule 14 auf, sowie einen leitend mit den Enden der Spule verbundenen Chipträger, umfassend ein Trägersubstrat 15b und einen Gußkörper 15a, in dem sich der integrierte Schaltkreis befindet. Die Spulenenden der Spule 14 sind elektrisch leitend mit hier nicht gezeigten, auf dem Trägersubstrat 15b befindlichen Leiterbahnen verbunden. Die anderen Enden der hier nicht gezeigten Leiterbahnen sind leitend mit dem im Gußkörper 15a befindlichen integrierten Schaltkreis verbunden. Die Spulenenden können aber auch direkt mit den Anschlußpunk-ten des integrierten Schaltkreises verbunden sein. Derartige Module sind dem Fachmann hinreichend bekannt und sollen hier nicht weiter ausgeführt werden.

Das gezeigte elektronische Modul ist in diesem Beispiel auf der Schicht 11 angeordnet. Die Schichten 9 und 12 weisen im Bereich der Durchbrechungen 13 und 18 Füllmaterial in Form von Schichten aus thermoplastischem Kunststoff 16 und 19 mit niedrigem Erweichungspunkt auf, die nach bereits oben beschriebenem Verfahren auf den Schichten 9 und 12 aufgebracht wurden. Den fertiglaminierten Datenträger zeigt die Fig. 5.

Bei dem eben gezeigten Datenträger wurde das elektronische Modul auf der Schicht 11 direkt vor der Laminierung des Datenträgers angeordnet. Oftmals erfolgt die Herstellung des elektronischen Moduls und die Fertigstellung des Datenträgers an unterschiedlichen Orten. Dann ist es jedoch wünschenswert, das relativ empfindliche Modul sicher zwischen den Orten transportieren zu können. In einer Weiterbildung des erfindungsgemäßen Verfahrens wird dazu deshalb in einem weiteren Verfahrensschritt ein Halbzeug zur Herstellung des Datenträgers gemäß Fig. 4 hergestellt. Hierzu wird wenigstens ein Punkt 17 aus einem Material, das der Fixierung des elektronischen Moduls dient, wie beispielsweise thermoplastischem Kunststoff mit niedrigem Erweichungspunkt oder einem sonstigen Kleber, auf der Schicht 11 nach einem der obengenannten Verfahren aufgebracht. Die Spule 14 des elektronischen Moduls wird über die Punkte 17 auf der Schicht 11 fixiert, wie dies Fig. 6 zeigt. Die Fixierung kann beispielsweise erfolgen, indem erwärmter, flüssiger thermoplastischer Kunststoff auf der Schicht 11 aufgetragen wird und die Spule 14 in den noch nicht erstarrten thermoplastischen Kunststoff 17 eingedrückt wird. Es ist aber auch denkbar, einen Flüssigkleber aufzutragen und hieran die Spule zu fixieren. Natürlich können die Punkte auch als thermoplastischer Kunststoff im Siebdruck oder im Thermotransferdruck aufgetragen werden. Der thermoplastische Kunststoff muß dann vor dem Aufkleben des elektronischen Moduls erhitzt und somit flüssig gemacht werden.

Hierdurch wird ein Halbzeug hergestellt, das bis zur Fertigstellung des Datenträgers das elektronische Modul trägt, wodurch das Modul auf einfache Weise sicher transportiert werden kann. Der Transport ist besonders vorteilhaft möglich, wenn die Schicht 11 in Form einer Endlosbahn bereitgestellt wird, auf der die elektronischen Module angeordnet werden. Das Band läßt sich dann ziehharmonikaartig falten. Zusätzlich kann die in Fig. 4 gezeigte Schicht 10 auf das in Fig. 6 gezeigte Halbzeug auflaminiert werden, so daß das elektronische Modul von beiden Seiten her geschützt ist.

Die Spule 14 des elektronischen Moduls kann anstelle der Fixierung oder ergänzend zur Fixierung durch die Punkte 17 auch mittels Ultraschallschweißung an der Schicht 11 fixiert werden. Damit kann auch die Aktivierung des Thermoklebers an den Punkten 17 zur Fixierung der Spule 14, welche derzeit manuell erfolgt, entfallen oder zumindest eingeschränkt werden. Im weiteren wird beim Ultraschallschweißen die Spule 14 in die Schicht 11 eingebettet, wodurch sich auch die Materialverdrängung beim späteren Kaschierprozeß verringert.

Ein anderes, hier nicht gezeigtes Halbzeug zur Herstellung eines Datenträgers kann auch erzeugt werden, indem das elektronische Modul 15a, 15b, 14 auf der Schicht 9 fixiert wird. Hierbei werden dann zusätzliche Punkte aus thermoplastischem Kunststoff oder einem sonstigen Kleber auf Schicht 9 aufgetragen, über die das elektronische Modul auf der Schicht 9 fixiert wird. Diese Weiterbildung hat den Vorteil, daß die zusätzlichen Punkte gemeinsam mit dem thermoplastischen Kunststoff 19, der als Füllmaterial dient, aufgetragen werden können. Bei einem gemäß diesem Halbzeug fertiggestellten Datenträger verläuft die Spule 14 dann zwischen den Schichten 9 und 10. Das hierbei verwendete elektronische Modul 15a, 15b, 14, kann deshalb vorteilhafterweise so ausgestaltet sein, daß die Spule 14 auf der dem Gußkörper 15a abgewandten Seite des Trägersubstrats 15b angeordnet ist.

Gemäß einer Weiterbildung des in Fig. 4 dargestellten Datenträgers wird zusätzlich zu den Schichten 9, 10, 11 und 12 eine weitere Schicht 21 bereitgestellt (siehe Fig. 7), die Durchbrechungen 23 und 24 aufweist, wobei die Durchbrechung 24 zur Aufnahme der Spule 14 im Bereich des Trägersubstrats 15b dient. Hierdurch werden die leitenden Verbindungen zwischen den Spulenenden und den am Trägersubstrat 15b befindlichen Leiterbahnen bei der Lamination unter Druck und Wärme entlastet. Die Schichtdicke der Schicht 21 wird hierbei vorteilhafterweise wenigstens so dick wie die Spule 14 gewählt. Zusätzlich kann die weitere Schicht 21 eine Schicht 22 aus thermoplastischem Kunststoff mit niedrigem Erweichungspunkt aufweisen, die die Durchbrechungen 23 und 24 umgibt. Die Schicht 22 aus thermoplastischem Kunststoff wird ebenfalls nach einem der obengenannten Verfahren aufgebracht. Bei der Lamination des Datenträgers erweicht die Schicht 22 aus thermoplastischem Kunststoff und füllt hierbei ebenfalls die verbleibenden Hohlräume im Bereich des elektronischen Moduls.

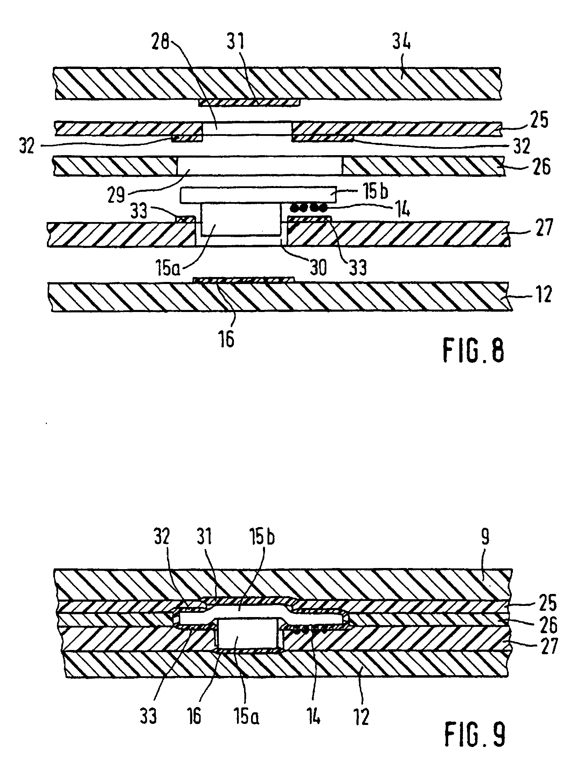

In einer weiteren Weiterbildung des Datenträgers nach Fig. 4 werden die Schichten 12, 25, 26, 27, 34 mit den Durchbrechungen 28, 29, 30 bereitgestellt, wie Fig.8 dies zeigt. Auf die Schichten wird nach obengenanntem Verfahren thermoplastischer Kunststoff 31, 32, 33 und 16 aufgebracht. Die Schichtdicke der Schicht 27 ist hierbei geringer als die Dicke des Gußkörpers 15a gewählt, so daß sich beim Laminieren der Schichten unter Druck das Trägersubstrat 15b derart verformt, daß es in die Durchbrechung 28 der Schicht 25 gedrückt wird. Hierdurch kann erreicht werden, daß die Spule trotz geringerer Dicke des Trägersubstrats 15b gegenüber dem Gußkörper 15a mittig im Datenträger angeordnet ist, wodurch sich mögliche Deformationen an den Deckschichten des Datenträgers durch die Spule verringern lassen.

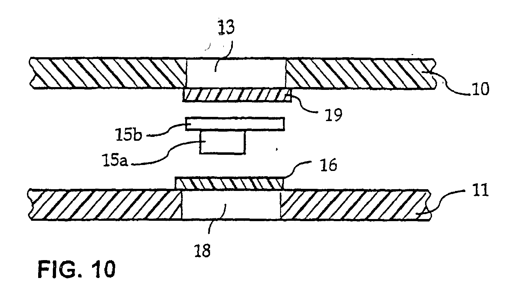

Die Fig. 10 zeigt die Schnittdarstellung eines Datenträgers gemäß dem Ausführungsbeispiel nach Fig. 4. In dieser Figur sind lediglich die interessierenden Schichten 10 und 11 sowie das elektronische Modul 15a und 15b ohne die Spule 14 dargestellt. An der Schicht 10 ist auf der dem elektronischen Modul 15a, 15b zugewandten Seite im Bereich der Durchbrechung 13 eine Schicht 19 aus thermoplastischem Material angeordnet. Auf die gleiche Weise ist an der Schicht 11 eine Schicht 16, ebenfalls bestehend aus thermoplastischem Material, angeordnet. Die Abmessungen der Schichten 16 bzw. 19 sind so dimensioniert, daß sie die Durchbrüche 18 bzw. 13 überdecken können, und somit an den Schichten 11 bzw. 10 zu befestigen sind. Die Schichten 16 und 19 bestehen vorzugsweise aus einer Klebstoffolie, welche vorgestanzt ist und mittels Thermotransferdruck auf die Schichten 10 und 11 aufgebracht wird. Alternativ zur Anbringung der Schichten 16 und 19 auf der dem elektro-nischen Modul 15a und 15b zugewandten Seite der Schichten 10 und 11 können diese Schichten ebenfalls auf der dem elektronischen Modul abgewandten Seite angeordnet werden.

Bei dem Ausführungsbeispiel nach Fig. 10 sind die Schichten 16 und 19 aus thermoplastischem Material vorzugsweise in Form einer Klebstorfolie ausgebildet, welche mit einem Trennpapier abgedeckt ist. Diese Klebstoffolie kann vorgestanzt sein und wird beispielsweise mit einem beheizbaren Stempel vom Trennpapier abgelöst und an den Schichten 10 und 11 bzw. am elektronischen Modul 15a, 15b fixiert.

Selbstverständlich ist das Verfahren nicht auf die Herstellung der gezeigten Datenträger beschränkt. Vielmehr ist der Fachmann aufgefordert, auch Teile der Ausführungsformen zu kombinieren und weiterzubilden.

## Patentansprüche

1. Herstellung eines mehrschichtigen, ein elektronisches Modul enthaltenden Datenträgers, **gekennzeichnet durch** folgende Schritte:
- Bereitstellen wenigstens einer ersten (4,11) und einer zweiten (5, 12) Schicht, wobei die erste Schicht (4,11) zumindest eine Öffnung (20, 18, 30) aufweist,
- Positionieren eines elektronischen Moduls (8a, 8b, 2 oder 15a, 15b, 14) in der Öffnung (20, 18, 30) der ersten Schicht, so daß zur zweiten Schicht (5, 12) hin zwischen dem Modul (8a, 8b, 2 oder 15a, 15b, 14) und der Öffnung ein Hohlraum verbleibt,
- Bereitstellen eines Füllmateriales (7,16,19) mit einer Erweichungstemperatur, die niedriger liegt als die Erweichungstemperatur der ersten (4,11) und zweiten (5,12) Schicht,
- Drucken des Füllmateriales (7, 16, 19) auf die zweite Schicht (5, 12) in dem der Öffnung (20, 18, 30) der ersten Schicht (4, 11) gegenüberliegenden Bereich, wobei die Größe des Bereichs auf die Größe der Öffnung abgestimmt ist,
- Laminieren zumindest der ersten (4,11) und zweiten (5, 12) Schicht sowie des Füllmateriales (7, 16, 19) unter Druck und Wärme derart, daß **durch** die Wärme zunächst das Füllmaterial (7, 16, 19) erweicht und zumindest teilweise in den zwischen Modul (8a, 8b, 2 oder 15a, 15b, 14) und Öffnung (20, 18, 30) verbliebenen Hohlraum eindringt, anschließend die erste (4,11) und zweite Schicht (5,12) erweichen und laminiert werden.

2. Verfahren nach Anspruch 1, **dadurch gekennzeichnet, daß** das Füllmaterial (7,16,19) über der Öffnung auf der ersten Schicht angebracht wird.

3. Verfahren nach Anspruch 1, **dadurch gekennzeichnet, daß** das Füllmaterial (7, 16, 19) an mindestens einer Seite des elektronischen Moduls (8a, 8b, 2, 15a, 15b, 14) angebracht wird.

4. Verfahren nach einem der Ansprüche 1 bis 3, **dadurch gekennzeichnet, daß** zusätzlich wenigstens ein weiterer Punkt (17) aus einem Material, das der Fixierung des elektronischen Moduls dient, auf einer der Schichten des Datenträgers aufgetragen wird.

5. Verfahren nach Anspruch 4, **dadurch gekennzeichnet, daß** das elektronische Modul bereits vor der Lamination des Datenträgers mit den aufgebrachten Punkten auf einer der Schichten fixiert wird.

6. Verfahren nach einem der Ansprüche 1 bis 5, **dadurch gekennzeichnet, daß** das elektronische Modul bereits vor der Lamination des Datenträgers zumindest teilweise mittels Ultraschallschweißung auf zumindest einer der Schichten fixiert wird.

7. Verfahren nach einem der Ansprüche 1 bis 6, **dadurch gekennzeichnet, daß** das Füllmaterial oder der Punkt aufgedruckt wird.

8. Verfahren nach Anspruch 7, **dadurch gekennzeichnet, daß** ein Siebdruckverfahren oder ein Thermotransferdruckverfahren verwendet wird.

9. Verfahren nach einem der Ansprüche 1 bis 8, **dadurch gekennzeichnet, daß** wenigstens eine der Schichten und/oder das elektronische Modul mit einem Plasma vorbehandelt wird, um hierdurch eine Verbesserung der Hafteigenschaften zu erzielen.

10. Verfahren nach Anspruch 1, **gekennzeichnet durch** folgende weitere Schritte:
- Aufbringen eines Punktes (17) aus einem zur Fixierung des elektronischen Moduls geeigneten Materiales auf der ersten Schicht (4, 11, 21),
- Fixieren des elektronischen Moduls (8a, 8b, 2 oder 15a, 15b, 14) nach der Positionierung in der Öffnung (20, 18, 30) der ersten Schicht.

11. Verfahren nach Anspruch 10, **dadurch gekennzeichnet, daß** als Punkt (17) ein thermoplastischer Kunststoff im Siebdruckverfahren oder im Thermotransferdruckverfahren aufgebracht wird.

12. Mehrschichtiger Datenträger mit
- einem einen integrierten Schaltkreis sowie leitend damit verbundene Kopplungselemente zur Kommunikation mit externen Geräten umfassenden elektronischen Modul (8a, 8b, 2 oder 15a, 15b, 14),
- wenigstens einer ersten, mit einer Öffnung (20, 18, 30) versehenen Schicht (4, 11),
- und wenigstens einer zweiten Schicht (5, 12), wobei
- das elektronische Modul (8a, 8b, 2 oder 15a, 15b, 14) in der Öffnung (20, 18, 30) derart angeordnet ist, daß zwischen Modul und Öffnung ein Raum verbleibt,
**dadurch gekennzeichnet, daß**
- im Bereich der Öffnung (20,18, 30) zur zweiten Schicht (5, 12) hin ein auf die Größe der Öffnung abgestimmter Raum zwischen erster (4,11) und zweiter (5,12) Schicht durch ein druckbares Füllmaterial (7,16,19) eingenommen wird, dessen Erweichungstemperatur unter den Erweichungstemperaturen der ersten und zweiten Schicht liegt,
- und das druckbare Füllmaterial (7, 16, 19) zumindest teilweise den Raum zwischen dem Modul (8a, 8b, 2 oder 15a, 15b, 14) und der Öffnung (20,18, 23) in der ersten Schicht (4,11) füllt.

13. Datenträger nach Anspruch 12, **dadurch gekennzeichnet, daß** auf einer der Schichten wenigstens ein Punkt (17) aus einem Material aufgebracht ist, der das elektronische Modul fixiert.

14. Datenträger nach Anspruch 12, **dadurch gekennzeichnet, daß** die Kopplungselemente entweder in Form einer Spule (14) oder in Form von Kontaktflächen (2) vorgesehen sind.

15. Datenträger nach Anspruch 14 mit einer Spule als Kopplungselement, **dadurch gekennzeichnet, daß** die erste Schicht eine weitere Öffnung (24) im Bereich des integrierten Schaltkreises aufweist, in der die Spule (14) im Bereich des integrierten Schaltkreises aufgenommen wird.

## Claims

1. Producing a multilayer data carrier containing an electronic module, **characterized by** the following steps:
- supplying at least a first layer (4, 11) and a second layer (5, 12), the first layer (4, 11) having at least one opening (20, 18, 30),
- positioning an electronic module (8a, 8b, 2 or 15a, 15b, 14) in the opening (20, 18, 30) in the first layer so that a cavity remains between the module (8a, 8b, 2 or 15a, 15b, 14) and the opening toward the second layer (5, 12),
- supplying a filling material (7, 16, 19) with a softening point that is lower than the softening point of the first layer (4, 11) and second layer (5, 12),
- printing the filling material (7, 16, 19) on the second layer (5, 12) in the area opposite the opening (20, 18, 30) in the first layer (4, 11), the size of the area being coordinated with the size of the opening,
- laminating at least the first layer (4, 11) and second layer (5, 12) and the filling material (7, 16, 19) under heat and pressure such that the heat causes first the filling material (7, 16, 19) to soften and penetrate at least partly into the cavity remaining between module (8a, 8b, 2 or 15a, 15b, 14) and opening (20, 18, 30), then the first layer (4, 11) and second layer (5, 12) to soften and be laminated.

2. The method of claim 1, **characterized in that** the filling material (7, 16, 19) is provided over the opening on the first layer.

3. The method of claim 1, **characterized in that** the filling material (7, 16, 19) is provided on at least one side of the electronic module (8a, 8b, 2, 15a, 15b, 14).

4. The method of any of claims 1 to 3, **characterized in that** at least one further dot (17) of a material that serves to fix the electronic module is additionally applied to one of the data carrier layers.

5. The method of claim 4, **characterized in that** the electronic module is already fixed on one of the layers with the applied dots before lamination of the data carrier.

6. The method of any of claims 1 to 5, **characterized in that** the electronic module is already fixed on at least one of the layers at least partly by means of ultrasound welding before lamination of the data carrier.

7. The method of any of claims 1 to 6, **characterized in that** the filling material or the dot is printed on.

8. The method of claim 7, **characterized in that** screen printing or heat transfer printing is used.

9. The method of any of claims 1 to 8, **characterized in that** at least one of the layers and/or the electronic module is pretreated with a plasma to achieve an improvement in adhesive properties.

10. The method of claim 1, **characterized by** the following further steps:
- applying a dot (17) of a material suitable for fixing the electronic module to the first layer (4, 11, 21),
- fixing the electronic module (8a, 8b, 2 or 15a, 15b, 14) after positioning in the opening (20, 18, 30) in the first layer.

11. The method of claim 10, **characterized in that** a thermoplastic material is applied by screen printing or heat transfer printing as the dot (17).

12. A multilayer data carrier having
- an electronic module (8a, 8b, 2 or 15a, 15b, 14) comprising an integrated circuit and coupling elements electrically connected with said circuit for communication with external devices,
- at least a first layer (4, 11) provided with an opening (20, 18, 30),
- and at least a second layer (5, 12), whereby
- the electronic module (8a, 8b, 2 or 15a, 15b, 14) is disposed in the opening (20, 18, 30) such that a space remains between module and opening,
**characterized in that**
- a space between first layer (4, 11) and second layer (5, 12), said space being coordinated with the size of the opening, is occupied in the area of the opening (20, 18, 30) toward the second layer (5, 12) by a printable filling material (7, 16, 19) whose softening point is lower than the softening points of the first and second layers,
- and the printable filling material (7, 16, 19) fills at least partly the space between the module (8a, 8b, 2 or 15a, 15b, 14) and the opening (20, 18, 23) in the first layer (4, 11).

13. The data carrier of claim 12, **characterized in that** at least one dot (17) of a material that fixes the electronic module is applied to one of the layers.

14. The data carrier of claim 12, **characterized in that** the coupling elements are provided either in the form of a coil (14) or in the form of contact surfaces (2).

15. The data carrier of claim 14 with a coil as a coupling element, **characterized in that** the first layer has a further opening (24) in the area of the integrated circuit for receiving the coil (14) in the area of the integrated circuit.

## Revendications

1. Fabrication d'un support de données multicouches comprenant un module électronique, **caractérisé par** les étapes suivantes:
- préparation d'au moins une première (4, 11) et une seconde couche (5, 12), ladite première couche (4, 11) présentant au moins une ouverture (20, 18, 30);
- positionnement d'un module électronique (8a, 8b, 2 ou 15a, 15b, 14) dans l'ouverture (20, 18, 30) de la première couche, de telle façon que vers la deuxième couche (5, 12), il subsiste un espace entre le module (8a, 8b, 2 ou 15a, 15b, 14) et l'ouverture;
- préparation d'un matériau de remplissage (7, 16, 19) à une température d'amollissement plus basse que la température d'amollissement de la première (4, 11) et de la seconde couche (5, 12);
- impression du matériau de remplissage (7, 16, 19) sur la deuxième couche (5, 12) dans la zone en face de l'ouverture (20, 18, 30) de la première couche (4, 11), la grandeur de ladite zone étant déterminée par la grandeur de l'ouverture;
- laminage d'au moins la première (4, 11) et la seconde couche (5, 12), ainsi que du matériau de remplissage (7, 16, 19) sous pression et à chaud, de telle façon que le matériau de remplissage (7, 16, 19) soit tout d'abord amolli par la chaleur et pénètre au moins partiellement dans l'espace subsistant entre le module (8a, 8b, 2 ou 15a, 15b, 14) et l'ouverture (20, 18, 30), la première (4, 11) et la seconde couche (5, 12) étant ensuite amollies et laminées.

2. Procédé selon la revendication 1, **caractérisé en ce que** le matériau de remplissage (7, 16, 19) est déposé sur l'ouverture de la première couche.

3. Procédé selon la revendication 1, **caractérisé en ce que** le matériau de remplissage (7, 16, 19) est déposé sur au moins un côté du module électronique (8a, 8b, 2 ou 15a, 15b, 14).

4. Procédé selon une des revendications 1 à 3, **caractérisé en ce qu'**en plus au moins un autre point (17), à partir d'un matériau qui sert à la fixation du module électronique, est déposé sur une des couches du support de données.

5. Procédé selon la revendication 4, **caractérisé en ce que** le module électronique est déjà fixé par les points déposés sur une des couches avant le laminage du support de données.

6. Procédé selon une des revendications 1 à 5, **caractérisé en ce que** le module électronique, déjà avant le laminage du support de données, est fixé au moins partiellement au moyen d'une soudure par ultrasons sur au moins une des couches.

7. Procédé selon une des revendications 1 à 6, **caractérisé en ce que** le matériau de remplissage ou le point est imprimé.

8. Procédé selon la revendication 7, **caractérisé en ce qu'**on utilisera un procédé d'impression sérigraphique ou par transfert thermique.

9. Procédé selon une des revendications 1 à 8, **caractérisé en ce qu'**au moins une des couches et/ou le module électronique sont prétraités avec un plasma, afin d'obtenir ainsi une amélioration de leur adhérence.

10. Procédé selon la revendication 1, **caractérisé par** les autres étapes suivantes:
- pose d'un point (17) d'un matériel adéquat pour la fixation du module électronique sur la première couche (4, 11, 21);
- fixation du module électronique (8a, 8b, 2 ou 15a, 15b, 14) après le positionnement dans l'ouverture (20, 18, 30) de la première couche.

11. Procédé selon la revendication 10, **caractérisé en ce qu'**une matière thermoplastique est utilisée pour former le point (17) par un procédé d'impression sérigraphique ou par transfert thermique.

12. Support de données multicouches avec
- un module électronique (8a, 8b, 2 ou 15a, 15b, 14) comprenant un circuit intégré ainsi que des éléments de couplage pour la communication avec les périphériques externes;
- au moins une première couche (4, 11) pourvue d'une ouverture (20, 18, 30);
- et au moins une deuxième couche (5, 12), où
- le module électronique (8a, 8b, 2 ou 15a, 15b, 14) est disposé dans l'ouverture (20, 18, 30) de telle façon qu'un espace subsiste entre le module et l'ouverture,
**caractérisé en ce que**
dans la zone de l'ouverture (20, 18, 30) vers la deuxième couche (5, 12), un espace déterminé par la grandeur de l'ouverture sera occupé entre la première (4, 11) et la deuxième couche (5, 12) par un matériau de remplissage pouvant être imprimé (7, 16, 19), dont la température d'amollissement se situe en dessous des températures d'amollissement des première et deuxième couches;
et que le matériau de remplissage (7, 16, 19) remplisse au moins partiellement l'espace entre le module (8a, 8b, 2 ou 15a, 15b, 14) et l'ouverture (20, 18, 30) dans la première couche (4, 11).

13. Support de données selon la revendication 12, **caractérisé en ce que**, sur une des couches au moins, un point (17) d'un matériel est posé, fixant le module électronique.

14. Support de données selon la revendication 12, **caractérisé en ce que** les éléments de couplage sont prévus soit en forme de bobine (14) soit en forme de surfaces de contact (2).

15. Support de données selon la revendication 14 avec une bobine comme élément de couplage, **caractérisé en ce que** la première couche présente une autre ouverture (24) dans la zone du circuit intégré, dans laquelle la bobine (14) est insérée dans la zone dudit circuit intégré.
